# EUROPEAN PATENT SPECIFICATION

(11) **EP 2 809 704 B1**
(45) Date of publication and mention of the grant of the patent: **15.07.2020**
(21) Application number: 13702554.0
(22) Date of filing: 21.01.2013
(51) Int. Cl.: C08G 65/00

(54) **PROCESS FOR PREPARING OLEFIN OXIDE POLYMERIZATION CATALYSTS**
VERFAHREN ZUR HERSTELLUNG VON OLEFINOXIDPOLYMERISIERUNGSKATALYSATOREN
PROCÉDÉ DE PRÉPARATION DE CATALYSEURS DE POLYMÉRISATION D'OXYDE D'OLÉFINE

(30) Priority: 30.01.2012 US 201261592201 P
(43) Date of publication of application: 10.12.2014
(73) Proprietor: Dow Global Technologies LLC, Midland, MI 48674 (US)
(72) Inventor: SIMMS, John, R., Saint Albans, WV 25177 (US); KENNEY, John, M., Scott Depot, WV 25560 (US)
(74) Representative: f & e patent
(86) International application number: PCT/US2013/022383
(87) International publication number: WO 2013/116026

(56) References cited:
- EP-A1- 0 008 131
- WO-A2-2008/145579
- US-A- 1 539 650
- US-A- 4 193 892
- US-A- 4 267 309
- PORSCH B ET AL: "Distribution analysis of ultra-high molecular mass poly(ethylene oxide) containing silica particles by size-exclusion chromatography with dual light-scattering and refractometric detection", JOURNAL OF CHROMATOGRAPHY, ELSEVIER SCIENCE PUBLISHERS B.V, NL, vol. 1068, no. 2, 18 March 2005 (2005-03-18), pages 249-260, XP027723450, ISSN: 0021-9673 [retrieved on 2005-03-18]

## Description

### FIELD

This invention relates to catalysts for use in the polymerization of olefin oxides and to a process for preparing those catalysts.

### INTRODUCTION

The catalytic polymerization of olefin oxides has been practiced for the past decades, one of the commercial processes being the suspension polymerization of ethylene oxide in a hydrocarbon solvent such as isopentane using as a catalyst calcium hexammine (Ca(NH₃)₆) modified with a mixture of propylene oxide and acetonitrile. In this process, it is believed that a living polymer is generated and is eventually terminated by impurities which build up in the medium. However, the actual structure of the catalytically active species and the mechanism of the polymerization are still unknown.

Various methods to produce the above-mentioned olefin oxide polymerization catalysts are described in the prior art. Some of those catalysts are said to be active in effecting polymerization of olefin oxides resulting in polymers having a relatively high molecular weight.

US 2,969,402 and US 3,037,943 teach the reaction of alkaline earth metal hexammine with an alkylene oxide and a saturated aliphatic hydrocarbon nitrile in excess liquid ammonia. The process is conducted in a batch type mode by dissolving the calcium metal in liquid ammonia, adding the aliphatic nitrile and the alkylene oxide and subsequently evaporating the ammonia to obtain a solid residue. Said solid product is used as a catalyst in the polymerization of ethylene oxide to produce a relatively low molecular weight poly(ethylene oxide).

US 3,627,702 is directed to a process for the production of high molecular weight polymers of 1,2-alkylene oxides using a catalyst prepared by reacting an alkaline earth metal hexammine and/or alkaline earth metal amide in liquid ammonia with a 1,2-alkylene oxide and cyanamide and/or dicyandiamide. In the examples the catalysts are prepared in a one-pot reaction by dissolving calcium in liquid ammonia and then adding ethylene oxide, cyanamide or its dimer, and an organic solvent, i.e. heptane. After evaporation of ammonia and part of the organic solvent the catalyst is obtained in the form of a suspension in heptane which is directly employed in the polymerization of ethylene oxide. In a comparative example a combination of ethylene oxide/acetonitrile is used as modifier in the preparation of the catalyst instead of ethylene oxide in combination with cyanamide or its dimer. However, the ethylene oxide polymer obtained when using this catalyst has a lower viscosity than those polymers obtained by using the ethylene oxide/cyanamide-modified catalyst. This indicates that the described ethylene oxide/acetonitrile-modified catalyst does not serve to produce exceptionally high molecular polymers.

US 4,193,892 and US 4,267,309 describe a further development of the catalyst preparation disclosed in US 2,969,402 and US 3,037,943 to obtain an olefin oxide polymerization catalyst providing an improvement in the productivity and/or in the molecular weight picture of the polymer. The modification includes aging the resulting catalyst following admixing of calcium metal, ammonia, an alkylene oxide and an organic nitrile, which aging is performed at a temperature of from 150 °C to 225 °C for up to 15 h after evaporation of ammonia. As it is advantageous when the final catalyst product is in slurry form for direct use in the olefin oxide polymerization, a high or intermediate boiling organic diluent is preferably added after or concurrently with evaporation of ammonia. The complete reaction including the evaporation of ammonia, addition of diluent and aging is conducted in a single vessel. The ethylene oxide polymers that are prepared by catalytic polymerization in the examples have 1 weight % solution viscosities at 25 °C of up to 17,000 mPa·s.

CN 1740209 A teaches the preparation of an ethylene oxide polymerization catalyst by dissolving calcium in liquid ammonia, adding propylene oxide modifier, acetonitrile and a carrier of a nanoscalic silica or nanoscalic mesoporous molecular sieve, evaporating excessive ammonia after complete reaction and adding a high boiling alkane solvent to form a catalyst slurry. The catalyst is used in the polymerization of ethylene oxide and results in ethylene oxide polymers having molecular weight ranges of from 50,000 to 2,000,000.

There are further references mentioning high molecular weight ethylene oxide polymers.

Poly(ethylene oxide)s having a weight molecular weight within the range of from 100,000 to 9,000,000 are commercially available from the Dow Chemical Company and various grades are sold under the trade names POLYOX Water-Soluble Resins (POLYOX WSR) and UCARFLOC Polymers (see Bulletin Form No. 326-00001-0302 AMS, published March 2002 by the Dow Chemical Company and entitled "POLYOX Water-Soluble Resins").

US 3,729,441 teaches how to inhibit degradation of poly(ethylene oxide) and discloses that polymers having a molecular weight such as 10,000,000 and even higher can be employed. However, in the examples only polymers having a molecular weight of up to 250,000 are used.

US 5,186,942, US 3,281,312 and US 2007/0269491 refer to the use of poly(ethylene oxide) having a wide molecular weight range of up to 10,000,000 Dalton in various applications. These references do not describe the production of poly(ethylene oxide) but generally refer to commercial availability of the poly(ethylene oxide). In all three cases only Union Carbide Corporation is mentioned as a supplier of the poly(ethylene oxide). However, Union Carbide Corporation which is now a wholly owned subsidiary of The Dow Chemical Company has never offered a poly(ethylene oxide) having a molecular weight of 10,000,000 Dalton or above. In addition, there are no known other commercial suppliers claiming to offer a poly(ethylene oxide) having a molecular weight of 10,000,000 Dalton.

For several applications including flocculating agents, super swelling tablets, osmotic dosage forms, aqueous drag reduction/drift control (reduction of the turbulent frictional drag of water in which olefin oxide polymers are dissolved), e.g. drift control of agricultural sprays, and concrete pumping lubricity olefin oxide polymers having extremely high molecular weight are desired. Hitherto, olefin oxide polymers having a weight average molecular weight of more than 9,000,000 are not known und thus, the problem addressed by the present invention is to provide a method for preparing extremely high molecular weight olefin oxide polymers, i.e. olefin oxide polymers such as poly(ethylene oxide) having a weight average molecular weight of more than 9,000,000.

### SUMMARY

The problem is solved by a process for the production of an olefin oxide polymerization catalyst comprising:
admixing at least one alkaline earth metal, liquid ammonia, an alkylene oxide, which is optionally substituted by aromatic radicals, and an organic nitrile having at least one acidic hydrogen atom to prepare a slurry of modified alkaline earth hexammine in liquid ammonia;
continuously transferring the slurry of modified alkaline earth hexammine in liquid ammonia into a stripper vessel and continuously evaporating ammonia, thereby accumulating the modified catalyst in the stripper vessel; and
upon complete transfer of the slurry of modified alkaline earth hexammine into the stripper vessel, aging the modified catalyst to obtain the final olefin oxide polymerization catalyst.

The present invention is also directed to the catalyst obtainable by the above process and to its use in the polymerization of an epoxide monomer.

### BRIEF DESCRIPTION OF DRAWINGS

Fig. 1 illustrates a semi-continuous stirred tank reaction system utilized in the process for producing an olefin oxide polymerization catalyst.

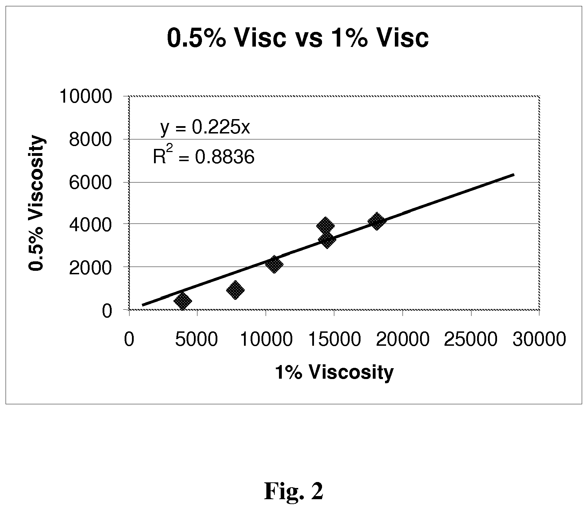

Fig. 2 illustrates the correlation of viscosities of 0.5 % and 1 % poly(ethylene oxide) solutions.

### DETAILED DESCRIPTION

It is surprising that modifying the standard batch type process for preparing an olefin oxide polymerization catalyst (as for example disclosed in US 4,193,892 and US 4,267,309) by conducting it in a semi-continuous manner leads to a highly active catalyst effective to produce olefin oxide polymers of higher molecular weight than achievable using current technology.

It is understood that the technical meaning of the terms "olefin oxide" and "alkylene oxide" is identical. However, for reasons of clarity the terms "olefin oxide" and "poly(olefin oxide)", respectively, are used in the present application to refer to the monomers or polymers taking part in the polymerization promoted by the inventive catalyst whereas the term "alkylene oxide" is used to refer to the modifier utilized in the preparation of the catalyst. Two different terms are used to emphasize that the "olefin oxide" and the "alkylene oxide" need not be identical compounds but can be selected independently.

The catalyst is referred to as "modified alkaline earth hexammine" and "modified calcium hexammine" or "modified alkaline earth hexammoniate" and "modified calcium hexammoniate", the technical terms "ammine" and "ammoniate" being synonymous. However, the fact that the catalyst is complex, pyrophoric, air sensitive, and insoluble in, or reactive with, most organic solvents makes chemical as well as spectroscopic analysis difficult. Consequently, it is not surprising that the structure of the catalyst prepared by either the conventional process or the improved process of the present invention is unknown. The improved new catalyst of the present invention catalyst will have to be, therefore, defined by the process by which it is made.

First, a slurry of the modified alkaline earth hexammine in liquid ammonia is prepared by admixing the at least one alkaline earth metal, liquid ammonia, the alkylene oxide and the organic nitrile. This step is carried out in the liquid phase with ammonia in the liquid state under suitable pressure, preferably it is carried out with agitation.

The alkaline earth metal used to prepare the alkaline earth hexammine is typically selected from calcium, strontium, barium and its mixtures; most preferably it is calcium.

The liquid ammonia employed in the process is preferably essentially anhydrous. Reacting the alkaline earth metal, preferably calcium, with excessive liquid ammonia results in the formation of alkaline earth hexammine dissolved in liquid ammonia. As two modifiers are also introduced in this step the product of this reaction is a modified alkaline earth hexammine.

One of the modifiers is an alkylene oxide which is optionally substituted by aromatic radicals. The optionally substituted alkylene oxides for use in the present invention consist of carbon, hydrogen, and oxirane oxygen atoms. The oxirane oxygen is bonded to vicinal or adjacent carbon atoms to form an epoxy group. The alkylene oxide can be an aliphatic, cycloaliphatic or mixed aliphatic/cycloaliphatic alkylene oxide. In some embodiments the alkylene oxide is substituted by one or more aromatic radicals, preferably aromatic radicals having 6 to 12 carbon atoms, e.g. phenyl. Illustrative alkylene oxides include ethylene oxide, propylene oxide, 1,2-epoxybutane, 2,3-epoxybutane, the epoxypentanes, the epoxyhexanes, the epoxyoctanes, the epoxydecanes, the epoxydodecanes, 2,4,4-trimethyl-1,2-epoxypentane, 2,4,4-trimethyl-2,3-epoxypentane, cyclohexylepoxythane, 7-oxabicyclo[4.1.0]heptane, 6-oxabicyclo[3.1.0]hexane, 3-methyl-6-oxabicyclo[3.1.0]hexane, and 4-ethyl-6-oxabicyclo[3.1.0]hexane. Exemplary alkylene oxides having aromatic substituents are styrene oxide and 1-phenyl-1,2-epoxypropane. Typically, the number of carbon atoms in the optionally substituted alkylene oxide ranges from 2 to 20, alkylene oxides having 2 to 5 carbon atoms are preferred, e.g. ethylene oxide, propylene oxide, 1,2-epoxybutane, and 2,3-epoxybutane. A single alkylene oxide or mixtures of two or more different alkylene oxides can be used. Propylene oxide is most preferred.

The second modifier is an organic nitrile consisting of carbon, nitrogen, and hydrogen atoms, at least one hydrogen atom being acidic. Typically, the nitrile is a mononitrile. The nitrile is preferably a saturated aliphatic mononitrile, more preferably a saturated aliphatic mononitrile wherein the organic moiety has 2 to 10 carbon atoms, e.g. acetonitrile, propionitrile, and butyronitrile, valeronitrile, isovaleronitrile, capronitrile, caprylonitrile and caprinitrile. Aromatic nitriles, preferably mononitriles such as benzonitrile and ortho-toluenenitrile are also useful. Acetonitrile is most preferred.

The order of introduction of the alkaline earth metal, the ammonia, and the modifiers can vary. The preferred procedure is to conduct the preparation of the slurry of modified alkaline earth hexammine in liquid ammonia in two steps. More preferably, the first step is to add the alkaline earth metal to the ammonia to form a solution of alkaline earth hexammine and the second step is to add the modifiers. The modifiers may be added subsequently in either sequence or simultaneously as two separate feeds or preferably as a mixture. Typically, the mixture of alkylene oxide and organic nitrile comprises 10 to 98 mol % of alkylene oxide and 2 to 90 mol % of organic nitrile, more preferably it is a mixture of 40 to 80 mol % of alkylene oxide and 20 to 40 mol % of organic nitrile, and most preferably a mixture of about 60 mol % of alkylene oxide and about 40 mol % of organic nitrile. One alternative mode of preparation is to introduce the alkaline earth metal and modifiers first together with a low boiling (and low freezing) organic diluent and then add the ammonia. Another alternative mode is to add the alkaline earth metal to a mixture of the ammonia and the modifiers.

In preferred embodiments the preparation of the slurry of modified alkaline earth hexammine in liquid ammonia is conducted in a continuous manner and comprises continually feeding the alkaline earth metal and liquid ammonia and continuously feeding the alkylene oxide and the organic nitrile. "Continually feeding" the alkaline earth metal includes both continuously feeding the alkaline earth metal or constantly feeding the alkaline earth metal in repeated single portions (multiple charges). A similar definition of "continually" feeding or adding applies to "continually" feeding or adding ammonia. Feeding the alkaline earth metal and ammonia in multiple charges is sometimes practicable in a small scale production process to mimic or approximate a continuous addition.

If the continuous mode is applied to the preferred two-step process described above this transforms to a process wherein the slurry of the modified alkaline earth hexammine is prepared in two different vessels: a first vessel ("dissolver vessel") where the alkaline earth metal and ammonia are combined to form alkaline earth hexammine dissolved in liquid ammonia and a second vessel ("modifier vessel") where the modifiers are added and the modified alkaline earth hexammine slurried in liquid ammonia is formed. More specifically, the continuous process to prepare the slurry of modified alkaline earth hexammine, preferably modified calcium hexammine, in liquid ammonia in two vessels comprises:
(1a) continually feeding alkaline earth metal, preferably calcium, into the dissolver vessel comprising liquid ammonia and
(1b) continually adding liquid ammonia to form alkaline earth hexammine dissolved in liquid ammonia;
(2a) continuously transferring the alkaline earth hexammine solution into the modifier vessel; and
(2b) continuously feeding the alkylene oxide and the organic nitrile into the modifier vessel to form a slurry of modified alkaline earth hexammine in liquid ammonia.

Preferably the alkaline earth metal is fed to the dissolver vessel continuously over the duration of the reaction in order to maintain an appropriate level in the dissolver vessel. Appropriate dosing and feeding systems for solids are well known to the person skilled in the art. It is preferred to use a system that avoids backwash of the pressurized ammonia from the dissolver. Typically, the liquid ammonia is added simultaneously with the alkaline earth metal to maintain the desired alkaline earth metal concentration in liquid ammonia. If the alkaline earth metal is fed in multiple charges over the duration of the reaction each alkaline earth metal charge is typically immediately followed by the addition of sufficient liquid ammonia to maintain the desired alkaline earth metal concentration. In all embodiments agitation (stirring) of the dissolver vessel is advantageous.

It is preferred to maintain the mole fraction of alkaline earth metal, preferably calcium, in the liquid ammonia in the dissolver vessel within the range of from 0.1 to 16 mol %, more preferably from 1 to 8 mol %, and most preferably from 2 to 6 mol %.

Typically, the dissolver vessel is held at a temperature within the range of from -50 to 25 °C and at a pressure within the range of from 8 to 1100 kPa, preferably at a temperature within the range of from -25 to 15 °C and at a pressure within the range of from 120 to 750 kPa, more preferably at a temperature within the range of from -15 to 5 °C and at a pressure within the range of from 200 to 600 kPa, and most preferably at a temperature within the range of from -11 to 1 °C and at a pressure within the range of from 250 to 520 kPa.

The alkaline earth hexammine solution is continuously drained off from the dissolver vessel and introduced in the modifier vessel simultaneously with the two modifiers, alkylene oxide and organic nitrile, to form the slurry of modified alkaline earth hexammine in liquid ammonia. As described above the modifiers can be added as separate feeds or as a mixture (including preferred mixing ratios described above), the latter being the preferred mode. Agitation (stirring) of the modifier vessel is advantageous.

Typically, the alkaline earth hexammine solution is transferred to the modifier vessel at a controlled rate. Methods to control the rate are well known to the person skilled in the art.

In preferred embodiments the alkylene oxide and the organic nitrile are fed into the modifier vessel at a rate to provide 0.5 to 1.5 mol of total alkylene oxide and organic nitrile, preferably 0.7 to 1.3 mol of total alkylene oxide and organic nitrile, more preferably 0.9 to 1.1 mol of total alkylene oxide and organic nitrile, and most preferably 1 mol of total alkylene oxide and organic nitrile for 1 mol of alkaline earth hexammine flowing in from the dissolver vessel.

Usually, the modifier vessel is held at a temperature within the range of from -45 to 30 °C and at a pressure within the range of from 1 to 1200 kPa, preferably at a temperature within the range of from -20 to 20 °C and at a pressure within the range of from 90 to 900 kPa, more preferably at a temperature within the range of from -10 to 10 °C and at a pressure within the range of from 190 to 620 kPa, and most preferably at a temperature within the range of from -6 to 6 °C and at a pressure within the range of from 240 to 540 kPa.

In the following step the slurry of modified alkaline earth hexammine in liquid ammonia either prepared in a batch type mode or by a continuous process as described directly above is transferred into a further vessel ("stripping vessel") and the ammonia is continuously evaporated. Thus, the modified catalyst accumulates in the stripping vessel. Agitation (stirring) of the stripping vessel is advantageous. The simultaneous introduction of the ammoniacal slurry of modified alkaline earth hexammine into the stripper vessel and evaporation of the ammonia results in an immediate removal of ammonia from the catalyst. In preferred embodiments of the present invention an accumulation of ammonia in the stripper vessel is avoided.

Preferably, the stripper vessel is held at a temperature of at least 30 °C, preferably at least 40 °C above the boiling point of ammonia at the system pressure. Typically, the stripper vessel is held at a temperature within the range of from 0 to 100 °C and at a pressure within the range of from 30 to 6300 kPa, preferably at a temperature within the range of from 25 to 100 °C and at a pressure within the range of from 100 to 3300 kPa, more preferably at a temperature within the range of from 25 to 70 °C and at a pressure within the range of from 200 to 520 kPa, and most preferably at a temperature within the range of from 29 to 41 °C and at a pressure within the range of from 240 to 420 kPa.

Upon complete transfer of the ammoniacal slurry of modified alkaline earth hexammine into the stripper vessel the modified catalyst is aged to obtain the final olefin oxide polymerization catalyst. In case of a continuous production of the slurry of modified alkaline earth hexammine in liquid ammonia the transfer into the stripper vessel is completed when after a predetermined amount of alkaline earth metal has been used up all feeds are terminated and the dissolver vessel (via the modifier vessel) and modifier vessel are emptied into the stripper vessel.

The stripper vessel is heated to reach the aging temperature. Typically, the aging is carried out at a temperature within the range of from 150 to 225 °C and at a pressure within the range of from 30 to 650 kPa, preferably at a temperature within the range of from 175 to 225 °C and at a pressure within the range of from 100 to 450 kPa, and more preferably at a temperature within the range of from 190 to 217 °C and at a pressure within the range of from 125 to 380 kPa. In preferred embodiments the aging is carried out for 0.1 to 15 h, preferably for 1 to 10 h, more preferably for 2 to 5 h, and most preferably for about 3 h. At the end of the aging period the catalyst is cooled to room temperature by air quenching or any other conventional quenching means.

It is desirable when the final catalyst product is in slurry form for transfer to, and direct use, in the olefin oxide polymerization. Thus, it is preferred to carry out at least part of the process in an inert organic liquid diluent. The organic diluent is one which is inert to any of the reactants or the catalyst product and will not be affected by operating conditions including evaporation of ammonia. As the diluent will be used to form the slurry used in the polymerization, it also should be inert to the polymerization reactants and product and the polymerization operating conditions. One advantage of using an inert diluent is in the realm of safety in view of the pyrophoric and air sensitive nature of the catalyst.

Preferably, the inert organic diluent has a boiling point within the range of from 25 to 330 °C and more preferably it is a C₁₂ to C₁₉ hydrocarbon diluent such as for example dodecane, tridecane, tetradecane, pentadecane and hexadecane. A single inert organic diluent or mixtures of two or more different organic diluent can be used. An exemplary inert organic diluent is a mixture of dodecane, tridecane and tetradecane such as NORPAR 13 ® hydrocarbon.

Typically, the inert organic diluent is contained in the stripper vessel into which the slurry of the modified catalyst in liquid ammonia is introduced and since the organic diluent does not or not completely evaporate under stripping conditions a slurry of the modified catalyst in the diluent is formed. Preferably, the weight ratio of inert organic diluent in the stripper vessel to total alkaline earth metal charged, preferably total calcium charged, is within a range of from 1:1 to 20:1, preferably from 2:1 to 15:1, and more preferably from 4:1 to 9:1.

If an inert organic diluent is used, the catalyst is aged in the form of a slurry in the organic diluent. The stripping and aging conditions described above are applicable for both cases: a dry catalyst product (no organic diluent present) and the catalyst product in slurry form. However, if no organic diluent is present the applicable pressure ranges in the stripping and aging steps are even broadened and include lower pressures up to 0 kPa.

Throughout the preparation of the catalyst, conventional precautions are preferably taken to exclude water, oxygen, and carbon dioxide from the system. This may be accomplished by using properly sealed apparatus together with an inert atmosphere such as nitrogen. The inert gas can be used first as a sweep and then the process steps can be conducted in the same atmosphere.

In preferred embodiments the present process for the production of an olefin oxide polymerization catalyst comprises:
(1a) continually feeding a predetermined amount of alkaline earth metal, preferably calcium, into a dissolver vessel comprising liquid ammonia and
(1b) continually adding liquid ammonia to form alkaline earth hexammine dissolved in liquid ammonia;
(2a) continuously transferring the alkaline earth hexammine solution into a modifier vessel;
(2b) continuously feeding the alkylene oxide and the organic nitrile into the modifier vessel to form a slurry of modified alkaline earth hexammine in liquid ammonia;
(3a) continuously transferring the slurry of modified alkaline earth hexammine in liquid ammonia into the stripper vessel and
(3b) continuously evaporating ammonia, thereby accumulating the modified catalyst in the stripper vessel;
(4b) upon consumption of the alkaline earth metal gradually terminating all feeds and emptying the dissolver vessel via the modifier vessel into the stripper vessel; and
(4c) aging the modified catalyst in the stripper vessel to obtain the final olefin oxide polymerization catalyst.

The preferred compounds and conditions described before are applicable in each of the above process steps.

The finished catalyst in dry or preferably in slurry form can then used in a conventional process for polymerizing an epoxide, typically in a suspension polymerization process. The novel catalysts of this invention are useful in effecting the polymerization of epoxide monomers which contain a cyclic group composed of two carbon atoms and one oxygen atom. Typically, these epoxide monomers can be characterized by the following formula: 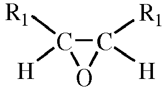 wherein each R¹, individually, can be hydrogen, haloaryl, or a hydrocarbon radical free from ethylenic and acetylenic unsaturation such as, for example, alkyl, aryl, cycloalkyl, aralkyl, or alkaryl radicals. In addition, both R¹ variables together with the epoxy carbon atoms, i.e. the carbon atoms of the epoxy group can represent a saturated cycloaliphatic hydrocarbon nucleus which contains from 4 to 10 carbon atoms, preferably from 4 to 8 carbon atoms, for example, a saturated cycloaliphatic hydrocarbon nucleus derived from cycloalkane, alkyl substituted cycloalkane, cyclobutane, cyclopentane, cyclohexane, cycloheptane, cyclooctane, methylcyclopentane, or amylcyclohexane. Illustrative R¹ radicals include, among others, methyl, ethyl, propyl, butyl, isobutyl, hexyl, isohexyl, 3-propylheptyl, dodecyl, octadecyl, phenyl, halophenyl, chlorophenyl, bromophenyl, benzyl, tolyl, ethylphenyl, butylphenyl, phenethyl, phenylpropyl, cyclopentyl, cyclobexyl, 2-methylcyclohexyl, and cycloheptyl.

A single epoxide monomer or an admixture of at least two different epoxide monomers can be employed as the monomeric feed. A broad range of epoxide monomers can be used in the polymerization process and representative expoxide monomers include, for example, ethylene oxide, propylene oxide, 1,2-butylene oxide, 2,3-butylene oxide, the epoxypentanes, the epoxyhexanes, 2,3-epoxyheptane, nonene oxide, 5-butyl-3,4-epoxyoctane, 1,2-epoxydodecane, 1,2-epoxyhexadecane, 1,2-epoxyoctadecane, 5-benzyl-2,3-epoxyheptane, 4-cyclo-hexyl-2,3-epoxypentane, chlorostyrene oxide, styrene oxide, ortho-, meta-, and para-ethylstyrene oxide, glycidyl benzene, the oxabicycloalkanes and alkyl-substituted oxabicycloalkanes, e.g., 7-oxabicyclo[4.1.0]heptane, oxabicyclo[3.1.0]hexane, 4-propyl-7-oxabicyclo[4.1.0]heptane, and 3-amyl-6-oxabicyclo[3.1.0]hexane.]

It is preferred that the epoxide monomer is an olefin oxide, more preferably an olefin oxide having 2 to 20 carbon atoms, such as for example ethylene oxide, propylene oxide, 1,2-epoxy-butane, or 2,3-epoxybutane. The most preferred monomer is ethylene oxide. Outstanding results are achieved in polymerizing ethylene oxide via that suspension polymerization route.

The novel catalyst can be used in a concentration in the range of 0.02 to 10 percent by weight based on the weight of the epoxide monomer feed, preferably olefin oxide feed. Typically, the catalyst is used in an amount corresponding to 0.0004 to 0.0040 g of alkaline earth metal per g of epoxide monomer, such as 0.0004 to 0.0040 g of calcium per g of olefin oxide, preferably 0.0007 to 0.0021 g of alkaline earth metal per g of epoxide monomer, such as 0.0007 to 0.0021 g of calcium per g of olefin oxide, more preferably 0.0010 to 0.0017 g of alkaline earth metal per g of epoxide monomer, such as 0.0010 to 0.0017 g of calcium per g of olefin oxide, and most preferably 0.0012 to 0.0015 g of alkaline earth metal per g of epoxide monomer, such as 0.0012 to 0.0015 g of calcium per g of olefin oxide. Polymerization temperatures can be in the range of from -30 to 150 °C, a preferred range for ethylene oxide monomer being 0 to 60 °C. Polymerization is generally carried out in an inert atmosphere such as nitrogen to exclude oxygen and carbon dioxide and in case of suspension polymerization in an inorganic diluent with agitation. Polymerization times can be run from minutes to days depending on the conditions used. Preferred times are 1 to 10 h. If suspension polymerization is performed the polymer product is typically obtained as a granular powder.

The use of the novel catalysts in the polymerization of epoxide monomers allows for the preparation of exceptionally high molecular weight polymers. Without being bound by theory it is believed that the unique capability of the novel catalysts to produce longer polymer chains than are otherwise obtained in the same polymerization system using the same raw materials is due to the combination of higher reactive site density (which is considered activity) and the ability to internally bind catalyst poisons.

The olefin oxide polymers that are obtained by using the novel catalysts according to the present invention have extremely high (ultrahigh) molecular weight. In case of poly(ethylene oxide) the approximate weight average molecular weight is preferably equal to or greater than 10,000,000 Dalton. Current technology to directly determine the molecular weight of ultrahigh molecular weight poly(ethylene oxide) is limited and thus, only the approximate weight average molecular weight can be measured by an indirect method. Poly(ethylene oxide) is water-soluble and the 1 % and 0.5 % solution viscosities of the inventive ethylene oxide polymers are compared with the solution viscosities of commercially available high molecular weight ethylene oxide polymers with known weight average molecular weight.

With the higher molecular weight polymers, viscosity measurements are complicated because of the difficulties encountered in dissolving the polymers in aqueous systems. During dissolution the mixture assumes a mucous-like consistency with a high tendency to gel. In addition, the extremely long chains are quite sensitive to shearing forces and must be stirred under very low shearing conditions in order to minimize mechanical degradation. The procedure for dissolving the polymers of the present invention may be found in Bulletin Form No. 326-00002-0303 AMS, published March 2003 by the Dow Chemical Company and entitled "POLYOX Water-Soluble Resins Dissolving Techniques". The solution viscosity values that are recited throughout this application refer to solutions of ethylene oxide polymers that are prepared according to the procedure set forth in the example.

The term "1 % aqueous solution viscosity" as used herein means the dynamic viscosity of a 1 weight % solution of the polymer in a mixture of water and isopropyl alcohol in a weight ratio of about 6:1. Accordingly, the term "0.5 % aqueous solution viscosity" means the dynamic viscosity of a 0.5 weight % solution of the polymer in a mixture of water and isopropyl alcohol in a weight ratio of about 6:1. In both cases the weight percentage of polymer is based on the weight of water only, i.e. not including the isopropyl alcohol. Preparing the aqueous solutions of the polymers the isopropyl alcohol is added first in order to allow the polymer particles to disperse as individuals before water is added. This seems to greatly minimize gel formation and provides reliable viscosity measurements. The 1 % aqueous solution viscosities of the ethylene oxide polymers according to the present invention are preferably greater than 20,000 mPa·s at 25 °C. The 0.5 % aqueous solution viscosities of the ethylene oxide polymers according to the present invention are preferably greater than 5,000 mPa·s at 25 °C. The 1 % and 0.5 % aqueous solution viscosities of the ethylene oxide polymers are determined at 25 °C using a Brookfield@ DV-II + digital viscometer. The Brookfield@ guard leg is in place when making the measurement. RV spindle #2 and a speed of 2 RPM are employed to make the measurement. The spindle is immersed in the polymer solution, avoiding entrapping air bubbles, and attached to the viscometer shaft. The height is adjusted to allow the solution level to meet the notch on the spindle. The viscometer motor is activated, and the viscosity reading is taken 5 min after the viscometer motor was started.

The ultrahigh molecular weight olefin oxide polymers, especially the ultrahigh molecular weight ethylene oxide polymers find application in a variety of technical fields and any application requiring high solution thickening properties at low polymer concentration would benefit from the use of the present ultrahigh molecular weight olefin polymers, especially the ultrahigh molecular weight ethylene oxide polymers. 'The primary applications of those new ultrahigh molecular polymers are in the area of flocculation (as flocculation agent), for applications such as tissue paper production, waste treatment and clay sedimentation. They are, for example, able to improve the yield in papermaking. The new polymers can also be used in pharmaceuticals e.g. in controlled release solid dose matrix systems such as in the production of super swelling tablets for drug delivery and osmotic dosage forms. They also find use in various personal care applications, for example as viscosity improver and foam stabilizer. Further applications include aqueous drag reduction/drift control (reduction of the turbulent frictional drag of water in which they are dissolved) such as drift control of agricultural sprays, and the new polymers may add lubricity to concrete to assist pumpability.

One embodiment of the invention will now be described in detail in the following example.

### EXAMPLE

### Preparation of modified calcium hexammine catalyst

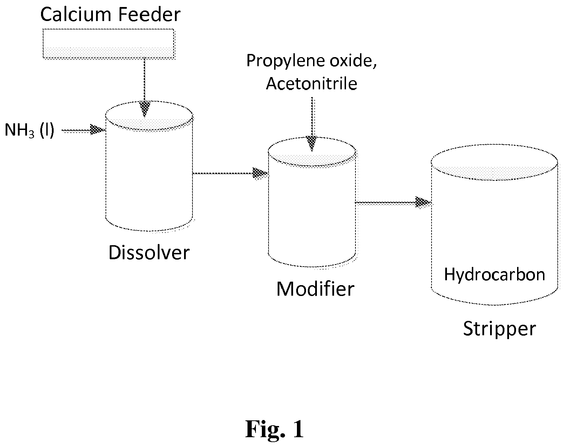

The semi-continuous stirred tank reaction system shown in Fig. 1 was utilized to produce a calcium based catalyst using parallel processing. A K-Tron single screw loss in weight gravimetric solids feeder (model # KCL-24-KQX) fed calcium metal to a lock hopper. The lock hopper was made up of two 1" Kitz ball valves. The lock hopper was operated as follows: A charge of approximately 2.5 g of calcium was fed on top of the top lock hoper ball valve. The top ball valve opened, allowing the calcium metal charge to fall into the lock hopper. The top lock hopper valve immediately closed and the lock hopper was purged with nitrogen gas to remove any traces of oxygen. Upon completion of the nitrogen purge of the lock hopper, the bottom valve was opened and the calcium metal charge dropped into the liquid ammonia contained in the agitated dissolver vessel. The dissolver vessel was maintained at a temperature range of -10 °C to 0 °C, and a pressure of 482 to 515 kPa (55-60 psig). Calcium metal was fed in multiple charges over the duration of the reaction in order to maintain an appropriate liquid level in the dissolver vessel. Each calcium charge was immediately followed by the addition of sufficient liquid ammonia to maintain a calcium concentration of approximately 2 mol %. The resulting reaction of calcium metal and liquid ammonia was formation of calcium hexammine, dissolved in liquid ammonia. The calcium hexammine solution was continuously transferred into the modifier vessel, at a controlled rate using a variable speed peristaltic pump. Simultaneously, a mixture of 60 mol % propylene oxide and 40 mol % acetonitrile was added to the modifier vessel. The propylene oxide/acetonitrile mixture was added to the agitated modifier vessel at a rate targeting 1 mol total propylene oxide/acetonitrile for 1 mol of calcium hexammine flowing in from the dissolver vessel. Reaction of the calcium hexammine with the propylene oxide/acetonitrile mixture produced a gray/white precipitate suspended in liquid ammonia. The resulting slurry was continuously pressure transferred from the modifier vessel to the agitated stripper vessel. The modifier vessel was maintained at a temperature of -5 °C to 5 °C and a pressure of 446 to 482 kPa (50-55 psig). The stripper vessel was charged with approximately 1000 mL of NORPAR13 ® hydrocarbon (dodecane/tridecane/tetradecane mixture) prior to initiation of the reaction. The slurry formed in the modifier vessel was continuously transferred to the stripper vessel over the duration of the reaction. The stripper was maintained at a pressure of 377 to 411 kPa (40-45 psig) and a temperature of 30 °C to 40 °C. Upon completion of the reaction all flows were terminated, and the stripper vessel pressure was lowered to 129 kPa to 136 kPa (4-5 psig). The stripper was heated at approximately 3 K/min to a maximum temperature of 205 °C. The slurry was maintained at 205 °C for 3 h. Upon completion of the thermal treating, the stripper was cooled and the catalyst slurry recovered. The resulting slurry was the catalyst source for the polymerization of ethylene oxide to produce ultrahigh molecular poly(ethylene oxide).

### Polymerization of ethylene oxide

A laboratory reaction system for the polymerization of ethylene oxide under pressure was utilized to polymerize ethylene oxide employing the catalyst slurry prepared as described in the above example. To the polymerization reactor were charged 443 g of isopentane, 28 g of ethylene oxide and 2 g of hydrophilic silica followed by a quantity of the catalyst slurry containing 0.26 g of calcium, calculated as the metal. Ethylene oxide flow into the reactor was set to maintain a 6 wt % concentration of ethylene oxide in isopentane and the reaction temperature was maintained at 38 °C. The reaction was run at a varying pressure around 170 kPa. The reaction system was kept under agitation and ethylene oxide flow was continued until a total of 190 g was fed into the reactor. The resulting finely divided polymer was recovered following vacuum evaporation of the hydrocarbon diluent. A white, granular polymer was obtained and prepared for aqueous dissolution.

### Dissolution of ethylene oxide polymer

The resulting granular ethylene oxide polymer was dissolved to form a 0.5 % aqueous solution in water/isopropyl alcohol to determine the dynamic viscosity in the following manner:
The polymer was screened through a 20 US Mesh screen prior to dissolution. 3.00 g of polymer were weighed into an 800 mL low-form glass beaker and 125 mL anhydrous isopropyl alcohol were added. The mixture was slurried by agitating at 300-400 RPM for 30-60 s. The stirrer consisted of a shaft with four propellers spaced equidistant. The bottom propeller was positioned to just clear the bottom of the beaker, while the top cleared the surface of the solution. 597 g of high purity deionized water were added to the slurry while maintaining the agitator speed at 300-400 RPM. The water was added quickly in a single addition. Following addition of the water, the agitator speed was maintained at 300-400 RPM for approximately 60 s. The speed of the agitator was reduced to 60 RPM and the solution covered, stirring was continued for 3 h . Upon completion of the dissolution, the stirrer was removed from the solution. The solution was visually examined for the presence of gels, if present, the solution was discarded and a new solution made. The solution was covered and placed in a 25 °C water bath for a minimum of 30 minutes, until reaching a temperature of 25 °C and then the 0.5 % aqueous solution viscosity was determined using a Brookfield@ DV-II + digital viscometer as described before in the general part of the description (Spindle #2 @ 2 RPM).

The 1 % aqueous solution viscosity measurement was performed as above with the exception that the amount of polymer was increased to 6.00 g and the amount of water decreased to 594 g.

0.5 % and 1 % aqueous solutions of several commercial poly(ethylene oxide) products were prepared as above and their viscosities were determined accordingly.

**Table 1:**

| Comparison of 0.5 % and 1 % aqueous solution Brookfield@ viscosities of commercially available poly(ethylene oxide)s and inventive poly(ethylene oxide). | | | | |
|---|---|---|---|---|
| Sample # | Poly(ethylene oxide) | Approximate M_{W} | 1% Solution Viscosity (mPa·s) | 0.5% Solution Viscosity (mPa·s) |
| 1* | | 4,000,000 | 3,940 | 380 |
| 2* | POLYOX® WSR-303 | 7,000,000 | 7,780 | 940 |
| 3* | POLYOX® WSR UCARFLOC® 309 | 8,000,000 | 10,640 | 2,130 |
| 4* | POLYOX® WSR UCARFLOC® 309 | 8,000,000 | 14,400 | 3,910 |
| 5* | POLYOX® WSR UCARFLOC® 309 | 8,000,000 | 14,470 | 3,250 |
| 6* | POLYOX® WSR UCARFLOC® 310 | 9,000,000 | 18,120 | 4,160 |
| 7 | Inventive poly(ethylene oxide) prepared above | > 10,000,000 | Over range (>20,000) Extrapolated¹: 25,470 | 5,730² |

| | | | | |
|---|---|---|---|---|
| * Comparative examples ¹ Determined by using the correlation of the above viscosities of 0.5 % and 1 % poly(ethylene oxide) solutions shown in Fig. 2 ² Average of two measurements | | | | |

Table 1 lists POLYOX® Water-Soluble Resins from The Dow Chemical Company including the highest molecular weight UCARFLOW Polymers commercially available. The approximate weight average molecular weights (M_{w}) indicated are the values as claimed by the manufacturer (see for example Bulletin Form No. 326-00001-0302 AMS, published March 2002 by the Dow Chemical Company and entitled "POLYOX Water-Soluble Resins"). The individual commercial grades marketed under the trade names mentioned in the table cover relatively broad viscosity ranges. In Examples 3*, 4* and 5* different lots of POLYOX® WSR UCARFLOC® 309 polymer were used. As the indicated M_{w} is the M_{w} of the whole grade the values in the table do not necessarily correspond to the M_{w} of the single lot. The inventive poly(ethylene oxide) demonstrated a 38 % higher 0.5 % aqueous solution viscosity than commercially available UCARFLOC® 310. Viscosity of a 1 % aqueous solution of the inventive poly(ethylene oxide) was off scale (>20,000 mPa·s) of the Brookfield@ viscometer spindle speed combination of RV spindle #2 at 2 RPM. Based upon the correlation of the solution viscosity of commercial ethylene oxide polymers (Samples 1* to 6*) to molecular weight the estimated molecular weight of the inventive ethylene oxide polymer is greater than 10,000,000 Dalton.

## Claims

1. A process for the production of an olefin oxide polymerization catalyst comprising:
admixing at least one alkaline earth metal, liquid ammonia, an alkylene oxide, which is optionally substituted by aromatic radicals, and an organic nitrile having at least one acidic hydrogen atom to prepare a slurry of modified alkaline earth hexammine in liquid ammonia;
continuously transferring the slurry of modified alkaline earth hexammine in liquid ammonia into a stripper vessel and continuously evaporating ammonia, thereby accumulating the modified catalyst in the stripper vessel; and
upon complete transfer of the slurry of modified alkaline earth hexammine into the stripper vessel, aging the modified catalyst to obtain the final olefin oxide polymerization catalyst.

2. The process of claim 1 wherein the accumulation of ammonia in the stripper vessel is avoided.

3. The process of claims 1 or 2 wherein the stripper vessel is held at a temperature of at least 30 °C, preferably at least 40 °C above the boiling point of ammonia at the system pressure.

4. The process of any one of claims 1 to 3 wherein the stripper vessel is held at a temperature within the range of from 0 to 100 °C and at a pressure within the range of from 30 to 6300 kPa, preferably at a temperature within the range of from 25 to 100 °C and at a pressure within the range of from 100 to 3300 kPa, more preferably at a temperature within the range of from 25 to 70 °C and at a pressure within the range of from 200 to 520 kPa, and most preferably at a temperature within the range of from 29 to 41 °C and at a pressure within the range of from 240 to 420 kPa.

5. The process of any one of claims 1 to 4 wherein an inert organic diluent, preferably an inert organic diluent having a boiling point within the range of from 25 to 330 °C, and more preferably a C₁₂ to C₁₉ hydrocarbon diluent, is contained in the stripper vessel and a slurry of the modified catalyst in the diluent is formed and aged.

6. The process of claim 5 wherein the weight ratio of inert organic diluent in the stripper vessel to total alkaline earth metal charged is within a range of from 1:1 to 20:1, preferably from 2:1 to 15:1, and more preferably from 4:1 to 9:1.

7. The process of any one of claims 1 to 6 wherein the preparation of the slurry of modified alkaline earth hexammine in liquid ammonia is conducted in a continuous manner and comprises continually feeding alkaline earth metal and liquid ammonia, continuously feeding the alkylene oxide and the organic nitrile and continuously transferring the slurry of modified alkaline earth hexammine in liquid ammonia to the stripper vessel.

8. The process of any one of claims 1 to 7 comprising:
(1a) continually feeding a predetermined amount of alkaline earth metal into a dissolver vessel comprising liquid ammonia and
(1b) continually adding liquid ammonia to form alkaline earth hexammine dissolved in liquid ammonia;
(2a) continuously transferring the alkaline earth hexammine solution into a modifier vessel;
(2b) continuously feeding the alkylene oxide and the organic nitrile into the modifier vessel to form a slurry of modified alkaline earth hexammine in liquid ammonia;
(3a) continuously transferring the slurry of modified alkaline earth hexammine in liquid ammonia into the stripper vessel and
(3b) continuously evaporating ammonia, thereby accumulating the modified catalyst in the stripper vessel;
(4b) upon consumption of the alkaline earth metal gradually terminating all feeds and emptying the dissolver vessel via the modifier vessel into the stripper vessel; and
(4c) aging the modified catalyst in the stripper vessel to obtain the final olefin oxide polymerization catalyst.

9. The process of claims 8 wherein the dissolver vessel is held at a temperature within the range of from -50 to 25 °C and at a pressure within the range of from 8 to 1100 kPa, preferably at a temperature within the range of from -25 to 15 °C and at a pressure within the range of from 120 to 750 kPa, more preferably at a temperature within the range of from -15 to 5 °C and at a pressure within the range of from 200 to 600 kPa, and most preferably at a temperature within the range of from -11 to 1 °C and at a pressure within the range of from 250 to 520 kPa.

10. The process of any one of claims 8 or 9 wherein the modifier vessel is held at a temperature within the range of from -45 to 30 °C and at a pressure within the range of from 1 to 1200 kPa, preferably at a temperature within the range of from -20 to 20 °C and at a pressure within the range of from 90 to 900 kPa, more preferably at a temperature within the range of from -10 to 10 °C and at a pressure within the range of from 190 to 620 kPa, and most preferably at a temperature within the range of from -6 to 6 °C and at a pressure within the range of from 240 to 540 kPa.

11. The process of any of the preceding claims wherein the alkaline earth metal is calcium.

12. The process of any one of the preceding claims wherein the alkylene oxide is propylene oxide.

13. The process of any one of the preceding claims wherein the organic nitrile is acetonitrile.

14. A catalyst obtainable by the process according to any of the preceding claims.

15. Use of the catalyst according to claim 14 in the polymerization of an epoxide monomer, preferably ethylene oxide.

## Patentansprüche

1. Verfahren zur Herstellung eines Olefinoxidpolymerisationskatalysators, umfassend:
Mischen von mindestens einem Erdalkalimetall, flüssigem Ammoniak, einem Alkylenoxid, das optional mit aromatischen Resten substituiert ist, und einem organischen Nitril mit mindestens einem sauren Wasserstoffatom, um eine Aufschlämmung von modifiziertem Erdalkalihexammin in flüssigem Ammoniak herzustellen,
kontinuierliches Überführen der Aufschlämmung von modifiziertem Erdalkalihexammin in flüssigem Ammoniak in ein Strippergefäß und kontinuierliches Verdampfen von Ammoniak und dabei Anreichern des modifizierten Katalysators in dem Strippergefäß und
nach vollständiger Überführung der Aufschlämmung des modifizierten Erdalkalihexammins in das Strippergefäß Altern des modifizierten Katalysators, um den endgültigen Olefinoxidpolymerisationskatalysator zu erhalten.

2. Verfahren nach Anspruch 1, wobei die Anreicherung von Ammoniak in dem Strippergefäß vermieden wird.

3. Verfahren nach Anspruch 1 oder 2, wobei das Strippergefäß bei einer Temperatur von mindestens 30°C, vorzugsweise mindestens 40°C oberhalb des Siedepunkts von Ammoniak bei Systemdruck gehalten wird.

4. Verfahren nach einem der Ansprüche 1 bis 3, wobei das Strippergefäß bei einer Temperatur innerhalb des Bereichs von 0 bis 100°C und bei einem Druck innerhalb des Bereichs von 30 bis 6.300 kPa, vorzugsweise bei einer Temperatur innerhalb des Bereichs von 25 bis 100°C und bei einem Druck innerhalb des Bereichs von 100 bis 3.300 kPa, bevorzugter bei einer Temperatur innerhalb des Bereichs von 25 bis 70°C und einem Druck innerhalb des Bereichs von 200 bis 520 kPa und am meisten bevorzugt bei einer Temperatur innerhalb des Bereichs von 25 bis 41°C und bei einem Druck innerhalb des Bereichs von 200 bis 520 kPa gehalten wird.

5. Verfahren nach einem der Ansprüche 1 bis 4, wobei ein inertes organisches Verdünnungsmittel, vorzugsweise ein inertes organisches Verdünnungsmittel mit einem Siedepunkt innerhalb des Bereichs von 25 bis 330°C und bevorzugter ein C₁₂-C₁₉-Kohlenwasserstoffverdünnungsmittel in dem Strippergefäß enthalten ist und eine Aufschlämmung des modifizierten Katalysators in dem Verdünnungsmittel gebildet und gealtert wird.

6. Verfahren nach Anspruch 5, wobei das Gewichtsverhältnis von inertem organischem Verdünnungsmittel in dem Strippergefäß zu dem gesamten zugeführten Erdalkalimetall innerhalb eines Bereichs von 1:1 bis 20:1, vorzugsweise von 2:1 bis 15:1 und bevorzugter von 4:1 bis 9:1 liegt.

7. Verfahren nach einem der Ansprüche 1 bis 6, wobei die Herstellung der Aufschlämmung des modifizierten Erdalkalihexammin in flüssigem Ammoniak in einer kontinuierlichen Art und Weise durchgeführt wird und fortwährendes Zuführen von Erdalkalimetall und flüssigem Ammoniak, kontinuierliches Zuführen des Alkylenoxids und des organischen Nitrils und kontinuierliches Überführen der Aufschlämmung von modifiziertem Erdalkalihexammin in flüssigem Ammoniak in das Strippergefäß umfasst.

8. Verfahren nach einem der Ansprüche 1 bis 7, umfassend:
(1a) fortwährendes Zuführen einer vorbestimmten Menge an Erdalkalimetall in ein Lösungsgefäß, das flüssigen Ammoniak enthält, und
(1b) fortwährendes Zugeben von flüssigem Ammoniak, um Erdalkalihexammin gelöst in flüssigem Ammoniak, zu bilden,
(2a) kontinuierliches Überführen der Erdalkalihexamminlösung in ein Modifiziergefäß,
(2b) kontinuierliches Zuführen des Alkylenoxids und des organischen Nitrils in das Modifiziergefäß, um eine Aufschlämmung von modifiziertem Erdalkalihexammin in flüssigem Ammoniak zu bilden,
(3a) kontinuierliches Überführen der Aufschlämmung von modifiziertem Erdalkalihexammin in flüssigem Ammoniak in das Strippergefäß und
(3b) kontinuierliches Verdampfen von Ammoniak und dadurch Anreichern des modifizierten Katalysators in dem Strippergefäß,
(4b) nach Verbrauch des Erdalkalimetalls allmähliches Einstellen aller Zuläufe und Entleeren des Lösungsgefäßes über das Modifiziergefäß in das Strippergefäß und
(4c) Altern des modifizierten Katalysators in dem Strippergefäß, um den endgültigen Olefinoxidpolymerisationskatalysator zu erhalten.

9. Verfahren nach Anspruch 8, wobei das Lösungsgefäß bei einer Temperatur innerhalb des Bereichs von -50 bis 25°C und einem Druck innerhalb des Bereichs von 8 bis 1.100 kPa, vorzugsweise bei einer Temperatur innerhalb des Bereich von -25 bis 15°C und einem Druck innerhalb des Bereichs von 120 bis 750 kPa, bevorzugter bei einer Temperatur innerhalb eines Bereichs von -15 bis 5°C und einem Druck innerhalb des Bereichs von 200 bis 600 kPa und am meisten bevorzugt bei einer Temperatur innerhalb des Bereichs von -11 bis 1°C und einem Druck innerhalb des Bereichs von 250 bis 520 kPa gehalten wird.

10. Verfahren nach einem der Ansprüche 8 oder 9, wobei das Modifiziergefäß bei einer Temperatur innerhalb des Bereichs von -45 bis 30°C und einem Druck innerhalb des Bereichs von 1 bis 1.200 kPa, vorzugsweise bei einer Temperatur innerhalb des ,Bereichs von -20 bis 20°C und einem Druck innerhalb des Bereichs von 90 bis 900 kPa, bevorzugter bei einer Temperatur innerhalb des Bereichs von -10 bis 10°C und einem Druck innerhalb des Bereichs von 190 bis 620 kPa und am meisten bevorzugt bei einer Temperatur innerhalb des Bereichs von -6 bis 6°C und einem Druck innerhalb des Bereichs von 250 bis 540 kPa gehalten wird.

11. Verfahren nach einem der vorstehenden Ansprüche, wobei das Erdalkalimetall Calcium ist.

12. Verfahren nach einem der vorstehenden Ansprüche, wobei das Alkylenoxid Propylenoxid ist.

13. Verfahren nach einem der vorstehenden Ansprüche, wobei das organische Nitril Acetonitril ist.

14. Katalysator erhältlich nach dem Verfahren gemäß einem der vorstehenden Ansprüche.

15. Verwendung des Katalysators gemäß Anspruch 14 bei der Polymerisation eines Epoxidmonomers, vorzugsweise Ethylenoxid.

## Revendications

1. Procédé pour la production d'un catalyseur de polymérisation d'oxyde d'oléfine, comprenant les étapes consistant à :
mélanger au moins un métal alcalino-terreux, de l'ammoniac liquide, un oxyde d'alkylène, qui est en option substitué par des radicaux aromatiques, et un nitrile organique comportant au moins un atome d'hydrogène acide, pour préparer une suspension d'hexammine alcalino-terreuse modifiée dans de l'ammoniac liquide ;
transférer en continu dans un récipient de fractionnement la suspension d'hexammine alcalino-terreuse modifiée dans de l'ammoniac liquide et évaporer en continu l'ammoniac, ce par quoi le catalyseur modifié s'accumule dans le récipient de fractionnement ; et
après transfert complet de la suspension d'hexammine alcalino-terreuse modifiée dans le récipient de fractionnement, vieillir le catalyseur modifié, pour obtenir le catalyseur de polymérisation d'oxyde d'oléfine final.

2. Procédé selon la revendication 1, dans lequel l'accumulation d'ammoniac dans le récipient de fractionnement est évitée.

3. Procédé selon la revendication 1 ou 2, dans lequel le récipient de fractionnement est maintenu à une température d'au moins 30 °C, de préférence d'au moins 40 °C au-dessus du point d'ébullition de l'ammoniac sous la pression du système.

4. Procédé selon l'une quelconque des revendications 1 à 3, dans lequel le récipient de fractionnement est maintenu à une température dans la plage de 0 à 100 °C et sous une pression dans la plage de 30 à 6 300 kPa, de préférence à une température dans la plage de 25 à 100 °C et sous une pression dans la plage de 100 à 3 300 kPa, de façon plus particulièrement préférée à une température dans la plage de 25 à 70 °C et sous une pression dans la plage de 200 à 520 kPa, et de façon tout particulièrement préférée à une température dans la plage de 29 à 41 °C et sous une pression dans la plage de 240 à 420 kPa.

5. Procédé selon l'une quelconque des revendications 1 à 4, dans lequel un diluant organique inerte, de préférence un diluant organique inerte ayant un point d'ébullition dans la plage de 25 à 330 °C, et de façon plus particulièrement préférée un diluant de type hydrocarbure en C₁₂-C₁₉, est contenu dans le récipient de fractionnement, et une suspension du catalyseur modifié dans le diluant est formée et vieillie.

6. Procédé selon la revendication 5, dans lequel le rapport pondéral de diluant organique inerte dans le récipient de fractionnement à métal alcalino-terreux total introduit est dans une plage de 1:1 à 20:1, de préférence de 2:1 à 15:1, et de façon plus particulièrement préférée de 4:1 à 9:1.

7. Procédé selon l'une quelconque des revendications 1 à 6, dans lequel la préparation de la suspension d'hexammine alcalino-terreuse modifiée dans de l'ammoniac liquide est effectuée d'une façon continue et comprend le fait d'introduire en continu un métal alcalino-terreux et de l'ammoniac liquide, le fait d'introduire en continu l'oxyde d'alkylène et le nitrile organique et le fait de transférer en continu au récipient de fractionnement la suspension d'hexammine alcalino-terreuse modifiée dans de l'ammoniac liquide.

8. Procédé selon l'une quelconque des revendications 1 à 7, comprenant les étapes consistant à :
(1a) introduire en continu une quantité préétablie de métal alcalino-terreux dans un récipient dissolveur comprenant de l'ammoniac liquide et
(1b) ajouter en continu de l'ammoniac liquide pour former de l'hexammine alcalino-terreuse en solution dans de l'ammoniac liquide ;
(2a) transférer en continu dans un récipient modificateur la solution d'hexammine alcalino-terreuse ;
(2b) introduire en continu l'oxyde d'alkylène et le nitrile organique dans le récipient modificateur pour former une suspension d'hexammine alcalino-terreuse modifiée dans de l'ammoniac liquide ;
(3a) transférer en continu dans le récipient de fractionnement la suspension d'hexammine alcalino-terreuse modifiée dans de l'ammoniac liquide et
(3b) évaporer en continu l'ammoniac, ce par quoi le catalyseur modifié s'accumule dans le récipient de fractionnement ; et
(4b) une fois le métal alcalino-terreux consommé, terminer progressivement toutes les alimentations et vider le contenu du récipient dissolveur, via le récipient modificateur, dans le récipient de fractionnement ; et
(4c) vieillir le catalyseur modifié dans le récipient de fractionnement, pour obtenir le catalyseur de polymérisation d'oxyde d'oléfine final.

9. Procédé selon la revendication 8, dans lequel le récipient dissolveur est maintenu à une température dans la plage de -50 à 25 °C et sous une pression dans la plage de 8 à 1 100 kPa, de préférence à une température dans la plage de -25 à 15 °C et sous une pression dans la plage de 120 à 750 kPa, de façon plus particulièrement préférée à une température dans la plage de -15 à 5 °C et sous une pression dans la plage de 200 à 600 kPa, et de façon tout particulièrement préférée à une température dans la plage de -11 à 1 °C et sous une pression dans la plage de 250 à 520 kPa.

10. Procédé selon l'une quelconque des revendications 8 et 9, dans lequel le récipient modificateur est maintenu à une température dans la plage de -45 à 30 °C et sous une pression dans la plage de 1 à 1 200 kPa, de préférence à une température dans la plage de -20 à 20 °C et sous une pression dans la plage de 90 à 900 kPa, de façon plus particulièrement préférée à une température dans la plage de -10 à 10 °C et sous une pression dans la plage de 190 à 620 kPa, et de façon tout particulièrement préférée à une température dans la plage de -6 à 6 °C et sous une pression dans la plage de 240 à 540 kPa.

11. Procédé selon l'une quelconque des revendications précédentes, dans lequel le métal alcalino-terreux est le calcium.

12. Procédé selon l'une quelconque des revendications précédentes, dans lequel l'oxyde d'alkylène est l'oxyde de propylène.

13. Procédé selon l'une quelconque des revendications précédentes, dans lequel le nitrile organique est l'acétonitrile.

14. Catalyseur pouvant être obtenu par le procédé selon l'une quelconque des revendications précédentes.

15. Utilisation du catalyseur selon la revendication 14, dans la polymérisation d'un monomère époxyde, de préférence d'oxyde d'éthylène.
